# EUROPEAN PATENT APPLICATION

(11) **EP 4 541 196 A1**
(43) Date of publication of application: **23.04.2025**
(21) Application number: 24198130.7
(22) Date of filing: 03.09.2024
(51) Int. Cl.: A21D 6/00, A21D 8/04, A21D 10/02, A21D 13/22, A21D 13/41

(54) **PROCESS FOR PRODUCING QUALITY BAKED PRODUCTS ON A LARGE SCALE**

(30) Priority: 16.10.2023 IT 202300021477
(71) Applicant: Massimiliano Prete S.r.l., 10098 Rivoli TO (IT)
(72) Inventor: PRETE, Massimiliano, 10098 Rivoli (IT)
(74) Representative: Garavelli, Paolo

(57) **Abstract**

A process for producing quality baked products on a large scale is described, comprising, in the preparation step, the sub-steps of:
- creating a pre-dough
- kneading
- leavening
- pre-cooking
- blast chilling at a temperature from +20 °C to -30 °C, preferably -20 °C
- packaging
- storing in a negative cell at a temperature from +20 °C to -30 °C, preferably at -20 °C
- transporting to administration,
- and, during administration, the sub-steps of:
- - regenerating
- - cooking
- - filling and plating.

## Description

The present invention relates to a process for producing quality baked products on a large scale.

Some processes are known in the art for subjecting food products, such as bread, brioches or the like, to normal cooking, followed by a sudden cooling of temperature, which allows them to be preserved over time and, when they are reheated after transport to the location of use, to then be brought back to a final cooking state which is practically identical to that wherein these products would find themselves at the end of a normal cooking process.

These processes are, however, limited to products of widespread consumption and of low quality, placing the final effectiveness for the consumer before the accuracy of the individual production steps: they are unable to obtain high quality products in general, and in particular to achieve the objectives of the present invention, as detailed below.

Object of the present invention is solving the aforementioned prior art problems, by providing a process for producing quality baked products on a large scale which allows guaranteeing high quality baked products characterized by lightness and taste, implementing large-scale production and ensuring a high standard in all processes consistently.

With this solution, commercial benefits are obtained deriving from the centralization of goods production, and in particular these benefits are:
- guarantee of the quality of the product, which can be preserved in any part of the world with a long-term shelf life;
- ability to monitor and minimize waste;
- ability to maintain a high quality standard in every single place of administration by creating a "brand identity";
- centralization of research and development activities: this activity can be monitored in a single point and guaranteed to all destination locations;
- reduction in personnel costs as a consequence of the reduction in working hours and unskilled labour: the creation of a single point wherein to produce would make the use of labour within the various distribution points easier, as only in a laboratory highly qualified manpower would be required, while in the final part (regeneration and final composition) specialized manpower is not required;
- less equipment linked to the production of dough at the points of administration (mixer, smaller oven and consequent lower cost and consumption of the machinery);
- greater range of products: the possibility of producing in a single laboratory would allow having a range of doughs, each different from the other. In fact, it is still difficult to manage different types of dough in a single kitchen in terms of capacity (each point requires highly qualified professionals) and time (putting a new type of dough into production complicates the management and production of the line of service);
- continuous production without interruptions; and
- reduction of warehouse space compared to food supplies (flour).

The above and other objects and advantages of the invention, as will appear from the following description, are achieved with a process for producing quality baked products on a large scale such as claimed in claim 1. Preferred embodiments and non-trivial variations of the present invention form the subject matter of the dependent claims.

It is understood that all attached claims form an integral part of this description.

The present invention will be described by some preferred embodiments thereof, provided by way of example and not by way of limitation, with reference to the production of some pizza-type baked products. Obviously, the process of the present invention can be applied for the production of any other type of high quality baked product.

Below, a preferred embodiment of the present invention is shown and described. It will be immediately obvious that countless variations and modifications can be made to what has been described without departing from the scope of the invention as appears from the attached claims.

The process for producing quality baked products on a large scale of the present invention is divided into a step of preparation of the products and a step of their administration in special administration places where such products are transported in conditions such that they can be administered to or preferably as if they had been prepared in such places.

The process of the invention includes, in the preparation step, the sub-steps of:
- creation of a pre-dough
- kneading
- leavening
- pre-cooking
- blast chilling at a temperature from +20 °C to -30 °C, preferably -20 °C
- packaging
- storage in a cell at a temperature from +20 °C to -30 °C, preferably at -20 °C
- transport to administration.

In the administration step, moreover, the process of the invention includes the sub-steps of:
- regeneration
- cooking
- filling and plating.

In particular, the sub-step of creating a pre-dough includes the use of the following components:
a) biga: a rough dough made up of water, flour and yeast, these three ingredients being kneaded for 3 - 4 minutes, while the temperature at the end of the kneading is 18° C, this dough having to remain in a leavening cell for 12 - 24 hours, or preferably 14 hours, from 4°C - 22°C, or more preferably at 18°C;
b) cream yeast: the main step of cream yeast is daily refreshment, using a composition including: yeast at 35.7% by weight, flour at 35.7% by weight and water at 28.6% by weight, wherein these ingredients must be kneaded for approximately 5 - 15 minutes, or preferably 10 minutes, left to mature for 2 - 4 hours, or more preferably 3 hours at a temperature of 22 - 30 °C, or preferably 26 °C in retarder-proofing cell, and used as cream sourdough in the dough;
c) poolish: made by kneading water, flour and brewer's yeast for 3 - 4 minutes, after which it remains for a couple of hours in an environment between 22 °C and 30 °C, or preferably 26 °C, and then is placed in the refrigerator at +2 - +10 °C, or preferably +4° C for 12 - 20 hours, or more preferably for 14 hours;
d) 100% solid bound mother yeast: the daily refreshment step is also important for this yeast, using a composition including: yeast at 40.8% by weight, flour at 40.8% by weight and water at 18.4% by weight, and kneading the ingredients for approximately 3 - 10 minutes, or preferably 5 minutes, wherein the refreshment step is repeated three times, alternating with rest steps at 24 - 30 °C, or preferably 28 °C in the cell of retarder-leaving, i.e. as refreshment - rest - refreshment - rest - refreshment - rest, at the end of which the yeast can be used in the dough.

Again in particular, for the production of the main baked products listed below, component a) is used alone or in combination with component b), or in combination with component b) and component c); component b) is used in combination with component a) or in combination with component a) and component c); component c) is only used in combination with component a) and component b); and component d) is used alone.

As will be clear from the following description, the kneading, leavening and pre-baking steps are subject to different conditions depending on the products to be made.

In particular, the regeneration step consists in completing the cooking of the products once they have arrived for administration, with cooking from 250 °C to 450 °C for a time of 1 to 15 minutes depending on the product to be made.

Instead, the cooking step consists in completing the cooking of the dough once it has awakened and risen, at a temperature from 250 °C to 450 °C for a time of 1 to 15 minutes.

The main baked products to which the process of the present invention is applied will now be described in detail below. As already mentioned, in the future other products of different types and consistencies may be made, again using this process.

The first product to which the process of the present invention is applied is a classic Neapolitan pizza, and for it the process includes the following steps:
- make a biga including the following components: single flour at 34.5% by weight, special flour at 34.5% by weight, water at 30.5% by weight and brewer's yeast at 0.5% by weight, combining all the ingredients into a machine to obtain a rough dough, then place in a cell at 4 - 22 °C, or preferably at 18 °C for 12 - 24 hours, or more preferably 14 hours;
- create a final dough including the following components: special flour at 32.9% by weight, brewer's yeast at 0.145% by weight, malt at 1.45% by weight, salt at 3.7% by weight, oil at 4.9% by weight, water at 57.4% by weight, adding brewer's yeast, malt, flour and a part of water to the biga, kneading and, once the dough is well bound, adding little by little all other ingredients, placing the dough for about 50 - 60 minutes in a pizza drawer, making bowls of 160 - 250 grams, or preferably 220 grams, placing them in a refrigerator with the drawers open, allowing them to remain at 0 - 10° C, or preferably +4 °C, from 4 - 10 hours, or more preferably 6 hours, taking them to a cell at -16 / -24 °C, or preferably -20 °C after 10 - 20 hours, or preferably 12 hours, bagging and labelling them.

A further product created is a crunchy pizza called "Fa croc", and for it the process includes the following steps:
- make a biga including the following components: single flour at 34.5% by weight, special flour at 34.5% by weight, water at 30.5% by weight and brewer's yeast at 0.5% by weight, combining all the ingredients into a machine to obtain a rough dough, then place in a cell at 4 - 22 °C, or preferably at 18 °C for 12 - 24 hours, or more preferably 14 hours;
- create a gel comprising the following components: water at 73.7% by weight, rice flour at 26.3% by weight, bringing the water to boiling point, pouring it into a bowl, incorporating the flour into the boiling water with a whisk, covering with cling film, leaving to cool and placing everything in the fridge at 0 - 10 °C, or preferably +4 °C for 10 - 20 hours, or preferably 12 hours;
- make a final dough including the following components: 0102 flour at 16.4% by weight, brewer's yeast at 0.97% by weight, sourdough starter cream at 3.6% by weight, water at 68.9% by weight, malt at 1.13% by weight, salt at 3.6% by weight, EVO oil at 5.4% by weight, combining mature biga, flour, yeasts, malt and half the water, starting the machine again until a gluten mesh is obtained, then incorporating the remaining water and, towards the end, combining salt with rice gel, allowing it to be incorporated and finally adding oil little by little, placing the mixture obtained in a container greased with oil, making an episode of 45 - 90 minutes, or preferably 60 minutes, to double, at 22 - 30 °C, or preferably 26 °C, forming loaves weighing 700 - 1200 grams or preferably 1000 grams, placing the loaves on greased drawers and letting them rise for approximately 40 - 120 minutes or preferably 60 minutes before rolling them out, cooking in the oven at a temperature of approximately 230 - 300 °C or preferably 270 °C, cooking the bases with a partial cooking rate of 75%, blast chilling them, bagging them, labelling them and placing them in a refrigerator.

A further product created is a crunchy corn and sunflower seeds, and for it the process includes the following steps:
- make a dough including the following components: 0101 flour at 68.64% by weight, water at 30.88% by weight and brewer's yeast at 0.48% by weight, combining all the ingredients in a machine to obtain a dough raw, then place in a cell at 4 - 22 °C, or preferably at 18 °C for 12 - 24 hours, or more preferably 14 hours;
- create a gel comprising the following components: water at 66.67% by weight, flour ottimais at 33.33% by weight, bringing the water to boiling point, pouring it into a bowl, incorporating the flour into the boiling water with a whisk, covering with cling film, leaving to cool and placing everything in the fridge at 0 - 10 °C, or preferably +4 °C for 10 - 20 hours, or preferably 12 hours;

- make a final dough including the following components: 0102 flour at 8.18% by weight, ottimais flour at 24.56% by weight, brewer's yeast at 0.68% by weight, creamed sourdough starter at 2.73% % by weight, water at 57.3% by weight, malt at 0.82% by weight, salt at 2.46% by weight, EVO oil at 3.27% by weight, combining mature biga, flour, yeasts, malt and half of the water, restarting the machine until a gluten mesh is obtained, then incorporating the remaining water and, towards the end, combining salt with ottimais gel, allowing it to be incorporated and finally adding oil gradually, placing in a container greased with oil the dough obtained, carrying out an episode of 45 - 90 minutes, or preferably 60 minutes, to double, at 22 - 30 °C, or preferably 26 °C, forming loaves weighing 200 - 400 grams or preferably 260 grams, placing the loaves on greased trays and letting them rise for approximately 40 - 120 minutes or preferably 60 minutes before rolling them out, cooking in the oven at a temperature of 230 - 300 °C or preferably 270 °C, cooking the bases with a partial cooking of the 75%, breaking them down, bagging them, labelling them and placing them in a refrigerator.

Another product created is a crispy barley pizza, and for it the process includes the following steps:
- make a dough including the following components: 0103 flour at 68.67% by weight, water at 30.9% by weight, brewer's yeast at 0.43% by weight, combining all three ingredients to create a dough pieces, raw, then placing it in a closed container with a perforated film, and fermenting at 4 - 22°C, or preferably 18°C for 12 - 24 hours, or preferably 14 hours;
- create a gel comprising the following components: water at 73.7% by weight, flour 0103 at 26.3% by weight, bringing the water to boiling point, pouring it into a bowl, incorporating the flour into the boiling water with a whisk, covering with cling film, leaving to cool and placing everything in the fridge at 0 - 10 °C, or preferably +4 °C for 10 - 20 hours, or preferably 12 hours;
- make a final dough including the following components: 0103 flour at 16.8% by weight, brewer's yeast at 1.26% by weight, creamed sourdough starter at 4.21% by weight, water at 67.23% by weight, malt at 1.26% by weight, salt at 3.78% by weight, EVO oil at 5.46% by weight, combining mature biga, flour, yeasts, malt and half the water, restarting the machine until a gluten mesh is obtained, then incorporating the remaining water and, towards the end, combining salt with barley gel, allowing it to be incorporated and finally adding oil gradually, placing the mixture obtained in a container greased with oil, making an episode of 45 - 90 minutes, or preferably 60 minutes, at doubling, at 22 - 30 °C, or more preferably at 26 °C, forming loaves weighing 200 - 400 grams or preferably 260 grams, placing the loaves on greased drawers and letting them rise for approximately 40 - 120 minutes or preferably 60 minutes before rolling them out, cooking in the oven at a temperature of 230 - 300 °C or preferably 270 °C, cooking the bases with a partial cooking rate of 75%, blast chilling them, packing them, label them and place them in a cooler.

Another product created is a La Pala type pizza, and for it the process includes the following steps:
- make a dough including the following components: 0101 flour at 69.16% by weight, water at 30.43% by weight, brewer's yeast at 0.41% by weight, combining all three ingredients to create a dough pieces, raw, then placing it in a closed container with a perforated film, and fermenting at 4 - 22°C, or preferably 18°C for 12 - 24 hours, or preferably 14 hours;
- create a gel comprising the following components: water at 76.9% by weight, rice flour at 23.1% by weight, bringing the water to boiling point, pouring it into a bowl, incorporating the flour into the boiling water with a whisk, covering with cling film, leaving to cool and placing everything at 0 - 10 °C, or preferably +4 °C for 10 - 20 hours, or preferably 12 hours;
- make a final dough including the following components: 0102 flour at 16.4% by weight, brewer's yeast at 0.97% by weight, sourdough starter cream at 3.6% by weight, water at 68.9% by weight, malt at 1.13% by weight, salt at 3.6% by weight, EVO oil at 5.4% by weight, combining mature biga, flour, yeasts, malt and half the water, starting the machine again until a gluten mesh is obtained, then incorporating the remaining water and, towards the end, combining salt with rice gel, allowing it to be incorporated and finally adding oil little by little, placing the mixture obtained in a container greased with oil, making an episode of 45 - 90 minutes, or preferably 60 minutes, at doubling, at 22 - 30 °C, or more preferably at 26 °C, forming loaves weighing 300 - 1000 grams or preferably 350 grams, placing the loaves on greased drawers and making them leaven for approximately 40 - 120 minutes or preferably 60 minutes before rolling them out, cooking in the oven at a temperature of 230 - 300 °C or preferably 270 °C, cooking the bases with a partial cooking rate of 75%, blast chilling them, bagging them, labelling them and placing them in a refrigerator.

Furthermore, a product created is a "pizz'otto" type pizza, and for it the process includes the following steps:
- make a dough including the following components: 0101 flour at 68.64% by weight, water at 30.88% by weight, brewer's yeast at 0.48% by weight, combining all three ingredients to create a dough pieces, raw, then placing it in a closed container with a perforated film, and fermenting at 4 - 22°C, or preferably 18°C for 12 - 24 hours, or preferably 14 hours;
- make a poolish including the following components: petra 3 flour at 61.81% by weight, water at 37.77% by weight, brewer's yeast at 0.42% by weight, kneading the three ingredients until the total absorption of the flour, the dough must still be rather rough without forming a gluten mesh. Place in a lightly greased tub and leave to double at a temperature of 22 - 30°C or preferably 26°C, then place in the fridge at 0 - 10°C, or preferably +4°C, for 12 - 20 hours or preferably 14 hours;
- create a final dough including the following components: brewer's yeast at 2.9% by weight, sourdough cream at 11.61% by weight, water at 29.04% by weight, malt at 5.16% by weight, rises to 19.35% by weight, EVO oil at 31.94% by weight. Combine the mature biga, the mature poolish, the creamed mother yeast, the brewer's yeast, the malt and 3/4 of the water, start the machine until the gluten mesh is obtained, at this point add the salt with the remaining water and let it incorporate, finally add the oil slowly. Place the dough in the same container as the lightly greased poolish, place it at a temperature of 22 - 30°C or preferably 26°C for 40 - 90 minutes or more preferably 60 minutes. Make balls weighing 160 grams - 250 grams or preferably 220 g, let them rise for approximately 20 - 50 minutes or more preferably 30 minutes, at 22 - 30 °C or preferably 26 °C, after which proceed with rolling out. The spreading must be delicate and homogeneous, once spread place it in a previously greased pan and leave to rise for approximately 150 - 180 minutes or preferably 150 minutes depending on the room temperature, approximately 22 - 30 °C, or preferably 26 °C. When optimal leavening is achieved, turn the pizz'otto onto the flour-dusted counter, make a few light holes with a fork and bake for 3 - 6 minutes or preferably 4 minutes at a temperature of 200 - 300 °C or preferably 240 °C at high level El and 330 °C on the ground. Once cooked, break them down, bag them, label them and place them neatly in a cooler.

Finally, a product created is a brioche-type pizza, and for it the process includes the following steps:
- make an evening dough including the following components: sugar at 12.76% by weight, water at 30° at 19.14% by weight, sourdough starter after the third refreshment at 10.5% by weight, butter at 12%, 76% by weight, egg yolk at 7.29% by weight, panettone flour at 36.46% by weight, malt at 1.09% by weight, starting the dough by adding flour, egg yolk to a mixer, malt, sugar, yeast and half the water, leaving the mixture to form and little by little adding the soft butter and the remaining water, leaving to rise for 12 - 16 hours at approximately 22 - 30 °C or preferably 24 °C in retarder-leaven cell so that the initial volume is tripled;
- make the morning dough, placing the dough from the previous evening in the machine and adding panettone flour at 39.06% by weight, leaving it to bind well and then adding egg yolk at 23.43% by weight, butter at 35.17% by weight and salt to 2.34% by weight, the temperature at the end of the dough must be 22 - 30 °C or preferably 24 °C, leaving the dough to rest in a container for approximately 45 - 90 minutes or preferably 60 minutes at 22 - 30 °C or preferably 26 °C, weighing into shapes of 100 - 500 grams or preferably 200 grams each, leaving to rest for 20 - 40 minutes or more preferably 30 minutes, spreading into a mould and leavening for 3 - 7 hours or preferably 5 hours before cooking in the oven at approximately 120 to 160 °C or preferably 145 °C for 10 - 30 minutes or preferably 14 minutes, cooking the bases with a partial cooking of 75%, breaking them down, bagging them, labelling them and placing them in a refrigerator.

Some preferred embodiments of the present invention have been illustrated and described previously: obviously, numerous variations and modifications, functionally equivalent to the previous ones, which fall within the scope of protection of the invention as highlighted in the attached claims, will be immediately evident to those skilled in the art.

## Claims

1. Process for producing quality baked products on a large scale comprising, in the preparation step, the sub-steps of:
- creation of a pre-dough
- kneading
- leavening
- pre-cooking
- blast chilling at a temperature from +20 °C to -30 °C, preferably -20 °C
- packaging
- storage in a cell at a temperature from +20 °C to -30 °C, preferably at -20 °C
- transport to administration,
and, during administration, the sub-steps of:
- regeneration
- cooking
- filling and plating.

2. Process according to claim 1, wherein the sub-step of creating a pre-dough includes the use of the following components:
a) biga: a rough dough made up of water, flour and yeast, these three ingredients being kneaded for 3 - 4 minutes, while the temperature at the end of the kneading is 18° C, said dough having to remain in a leavening cell from 12 to 24 hours from 14°C from +4°C to 22°C or preferably 18°C;
b) cream yeast: the main step of cream yeast is daily refreshment, using a composition including: yeast at 35.7% by weight, flour at 35.7% by weight and water at 28.6% by weight, wherein these ingredients must be kneaded for approximately 10 minutes, left to mature for 3 hours at a temperature of between 22°C and 28°C in a retarder-proofer, and used as a creamed sourdough starter in the dough;
c) poolish: made by kneading water, flour and brewer's yeast for 3 - 4 minutes, after which it remains for a couple of hours in an environment between 22°C and 30°C and then is placed in the refrigerator at +4°C for 10 - 18 hours or preferably 14 hours;
d) 100% solid bound mother yeast: the daily refreshment step is also important for this yeast, using a composition including: yeast at 40.8% by weight, flour at 40.8% by weight and water at 18.4% by weight, and kneading the ingredients for approximately 5 minutes, wherein the refreshment step is repeated three times alternating with rest steps at 28° C in a retarder-proofer, i.e. as refreshment - rest - refreshment - rest - refreshment - rest, at the end of which the yeast can be used in the dough.

3. Process according to claim 2, wherein, for the preparation of the products, component a) is used alone or in combination with component b), or in combination with component b) and component c); component b) is used in combination with component a) or in combination with component a) and component c); component c) is only used in combination with component a) and component b); and component d) is used alone.

4. Process according to any of the previous claims, wherein the regeneration step consists in completing the cooking of the products once they have arrived at administration, with cooking from 250 to 450 °C for a time of from 1 to 15 minutes depending on the product to be made.

5. Process according to any of the previous claims, wherein the cooking step consists in completing the cooking of the dough once awakened and leavened, at a temperature of from 250 °C to 450 °C for a time of from 1 to 15 minutes.

6. Process according to any of the previous claims 2 to 5, wherein the product produced is a classic Neapolitan pizza, the process comprising the following steps:
- make a biga including the following components: single flour at 34.5% by weight, special flour at 34.5% by weight, water at 30.5% by weight and brewer's yeast at 0.5% by weight, combining all the ingredients into a machine to obtain a rough dough, then place in a cell at 4 - 22 °C, or preferably at 18 °C for 12 - 24 hours, or more preferably 14 hours;
- create a final dough in 8 hours including the following components: special flour at 32.9% by weight, brewer's yeast at 0.145% by weight, malt at 1.45% by weight, salt at 3.7% by weight, oil at 4.9% by weight, water at 57.4% by weight, adding brewer's yeast, malt, flour and a part of water to the biga, kneading and, once the dough is well bound, combining all the other ingredients little by little, letting the dough rest for about 50 - 60 minutes in a pizza drawer, making 220 gram bowls, placing them in a refrigerator with the drawers open, taking them in the evening to a cell at about -20 °C and, after 10 - 20 hours, or preferably 12 hours, bagging them, labelling them and placing them in a refrigerator.

7. Process according to any of the previous claims from 2 to 5, wherein the product produced is a crunchy pizza called "Fa croc", the process comprising the following steps:
- make a biga including the following components: single flour at 34.5% by weight, special flour at 34.5% by weight, water at 30.5% by weight and brewer's yeast at 0.5% by weight, combining all the ingredients in a machine to obtain a rough dough, then place in a cell at 16 - 22 °C for 14 hours;
- create a gel comprising the following components: water at 73.7% by weight, flour 0103 at 26.3% by weight, bringing the water to boiling point, pouring it into a bowl, incorporating the flour into the boiling water with a whisk, covering with cling film, leaving to cool and placing everything in the fridge at +4 °C for 10 - 20 hours, or preferably 12 hours;
- make a final dough including the following components: 0102 flour at 16.4% by weight, brewer's yeast at 0.97% by weight, sourdough starter cream at 3.6% by weight, water at 68.9% by weight, malt at 1.13% by weight, salt at 3.6% by weight, EVO oil at 5.4% by weight, combining mature biga, flour, yeasts, malt and half the water, starting the machine again until a gluten mesh is obtained, then incorporating the remaining water and, towards the end, combining salt with rice gel, allowing it to be incorporated and finally adding oil little by little, placing the mixture obtained in a container greased with oil, making an episode of 45 - 90 minutes, when doubled, at 22 - 30 °C, forming loaves weighing 700 - 1200 grams or preferably 1000 grams, placing the loaves on greased drawers and letting them rise for about 40 - 90 minutes or preferably 60 minutes before to roll them out, cooking in the oven at a temperature of approximately 230 - 300 °C or preferably 270 °C, cooking the bases with a partial cooking of 75%, breaking them down, bagging them, labelling them and placing them in a refrigerator.

8. Process according to any of the previous claims from 2 to 5, wherein the product produced is a pizza called Crispy corn and sunflower seeds, the process comprising the following steps:
- make a dough including the following components: 0101 flour at 68.64% by weight, water at 30.88% by weight and brewer's yeast at 0.48% by weight, combining all the ingredients in a machine to obtain a dough raw, then place in a cell at 16 - 22 °C for 14 - 16 hours;
- create a gel comprising the following components: water at 66.67% by weight, flour ottimais at 33.33% by weight, bringing the water to boiling point, pouring it into a bowl, incorporating the flour into the boiling water with a whisk, covering with cling film, leaving to cool and placing everything in the fridge at +4 °C for 10 - 20 hours, or preferably 12 hours;
- make a final dough including the following components: 0102 flour at 8.18% by weight, ottimais flour at 24.56% by weight, brewer's yeast at 0.68% by weight, creamed sourdough starter at 2.73% % by weight, water at 57.3% by weight, malt at 0.82% by weight, salt at 2.46% by weight, EVO oil at 3.27% by weight, combining mature biga, flour, yeasts, malt and half of the water, restarting the machine until a gluten mesh is obtained, then incorporating the remaining water and, towards the end, combining salt with ottimais gel, allowing it to be incorporated and finally adding oil gradually, placing it in a greased container Oil the dough obtained, doubling it for 45 - 90 minutes, at 22 - 30 °C, forming loaves weighing 200 - 400 grams or preferably 260 grams, placing the loaves on greased drawers and letting them rise for approximately 40 - 90 minutes or preferably 60 minutes before rolling them out, cooking in the oven at a temperature of 230 - 300 °C or preferably 270 °C, cooking the bases with a partial cooking rate of 75%, breaking them down, bagging them, labelling them and putting them away in a cooler.

9. Process according to any of the previous claims from 2 to 5, wherein the product produced is a crispy barley pizza, the process comprising the following steps:
- make a dough including the following components: 0103 flour at 68.67% by weight, water at 30.9% by weight, brewer's yeast at 0.43% by weight, combining all three ingredients to create a dough pieces, raw, then placing it in a closed container with a perforated film, and fermenting at 4 - 22°C, or preferably 18°C for 12 - 24 hours, or preferably 14 hours;
- create a gel comprising the following components: water at 73.7% by weight, flour 0103 at 26.3% by weight, bringing the water to boiling point, pouring it into a bowl, incorporating the flour into the boiling water with a whisk, covering with cling film, leaving to cool and placing everything in the fridge at +4 °C for 10 - 20 hours, or preferably 12 hours;
- make a final dough including the following components: 0103 flour at 16.8% by weight, brewer's yeast at 1.26% by weight, creamed sourdough starter at 4.21% by weight, water at 67.23% by weight, malt at 1.26% by weight, salt at 3.78% by weight, EVO oil at 5.46% by weight, combining mature biga, flour, yeasts, malt and half the water, restarting the machine until a gluten mesh is obtained, then incorporating the remaining water and, towards the end, combining salt with rice gel, allowing it to be incorporated and finally adding oil little by little, placing the mixture obtained in a container greased with oil, making a episode of 60 - 90 minutes, when doubled, at 22 - 30 °C, forming loaves weighing 200 - 400 grams or preferably 260 grams, placing the loaves on greased drawers and letting them rise for around 40 - 90 minutes or preferably 60 minutes before rolling them out, cooking in the oven at a temperature of 230 - 300 °C or preferably 270 °C, cooking the bases with a partial cooking of 75%, breaking them down, bagging them, labelling them and placing them in a refrigerator.

10. Process according to any of the previous claims 2 to 5, wherein the product produced is a shovel-type pizza, the process comprising the following steps:
- make a dough including the following components: 0101 flour at 69.16% by weight, water at 30.43% by weight, brewer's yeast at 0.41% by weight, combining all three ingredients to create a dough pieces, raw, then placing it in a container closed with a perforated film, and fermenting at 4 - 22°C or preferably 18°C for 12 - 24 hours or preferably 14 hours;
- create a gel comprising the following components: water at 76.9% by weight, rice flour at 23.1% by weight, bringing the water to boiling point, pouring it into a bowl, incorporating the flour into the boiling water with a whisk, covering with cling film, leaving to cool and placing everything at +4 °C for 10 - 20 hours or preferably 12 hours;
- make a final dough including the following components: 0102 flour at 16.4% by weight, brewer's yeast at 0.97% by weight, sourdough starter cream at 3.6% by weight, water at 68.9% by weight, malt at 1.13% by weight, salt at 3.6% by weight, EVO oil at 5.4% by weight, combining mature biga, flour, yeasts, malt and half the water, starting the machine again until a gluten mesh is obtained, then incorporating the remaining water and, towards the end, combining salt with rice gel, allowing it to be incorporated and finally adding oil little by little, placing the mixture obtained in a container greased with oil, making an episode of 45 - 90 minutes, when doubled, at 22 - 30 °C, forming loaves weighing 300 - 1000 grams or preferably 350 grams, placing the loaves on greased drawers and letting them rise for about 40 - 90 minutes or preferably 60 minutes before to roll them out, cooking in the oven at a temperature of 230 - 300 °C or preferably 270 °C, cooking the bases with a partial cooking of 75%, breaking them down, bagging them, labelling them and placing them in a refrigerator.

11. Process according to any one of the previous claims from 2 to 5, wherein the product produced is a pizz'otto type pizza, the process comprising the following steps:
- make a dough including the following components: 0101 flour at 68.64% by weight, water at 30.88% by weight, brewer's yeast at 0.48% by weight, combining all three ingredients to create a dough pieces, raw, then placing it in a container closed with a perforated film, and fermenting at 4 - 22°C or preferably 18°C for 12 - 24 hours or preferably 14 hours;
- make a poolish including the following components: petra 3 flour at 61.81% by weight, water at 37.77% by weight, brewer's yeast at 0.42% by weight, kneading the three ingredients until the total absorption of the flour, the dough must still be rather rough without forming a gluten mesh, then place in a lightly greased tub for a couple of hours at a temperature of 22 - 30° C, then place in the fridge at +4°C for 10 - 18 hours or preferably 14 hours;
- create a final dough including the following components: brewer's yeast at 2.9% by weight, sourdough cream at 11.61% by weight, water at 29.04% by weight, malt at 5.16% by weight, salt at 19.35% by weight, EVO oil at 31.94% by weight, combining the mature biga, the mature poolish, the creamed mother yeast, the brewer's yeast, the malt and 3/4 of the water, starting the machine until the gluten mesh is obtained, at this point adding the salt with the remaining water and allowing it to incorporate, finally adding the oil little by little, placing the dough in the same container as the lightly greased poolish, placing it at a temperature of 22 - 30° C or preferably 26 °C for 40 - 90 minutes or more preferably 60 minutes, making the balls weighing 160 grams - 250 grams or preferably 220 g, leaving them to rise for about 20 - 50 minutes or more preferably 30 minutes, from 22 - 30 °C or preferably 26 °C, after which proceeding with the spreading, the spreading must be delicate and homogeneous, once spread placing it in a previously greased pan and leaving it to rise for approximately 150 - 180 minutes or preferably 150 minutes at depending on the room temperature, approximately 22 - 30 °C, or preferably 26 °C, upon reaching optimal leavening by turning the pizz'otto onto the flour-dusted counter, making a few light holes with a fork and baking for 3 - 6 minutes or preferably 4 minutes at a temperature of 200 - 300 °C or preferably 240 °C at the top and 330 °C at the ground, once cooked, breaking them down, bagging them, labelling them and placing them neatly in a refrigerator.

12. Process according to any one of the previous claims from 2 to 5, wherein the product produced is a brioche-type pizza, the process comprising the following steps:
- make an evening dough including the following components: sugar at 12.76% by weight, water at 30° at 19.14% by weight, sourdough starter after the third refreshment at 10.5% by weight, butter at 12%, 76% by weight, egg yolk at 7.29% by weight, panettone flour at 36.46% by weight, malt at 1.09% by weight, starting the dough by adding flour, egg yolk to a mixer, malt, sugar, yeast and half the water, leaving the mesh to create and little by little adding the soft butter and the remaining water, leaving to rise for 12 - 16 hours at around 24 °C so that the initial volume is tripled;
- make the morning dough, placing the dough from the previous evening in the machine and adding panettone flour at 39.06% by weight, leaving it to bind well and then adding egg yolk at 23.43% by weight, butter at 35.17% by weight and rises to 2.34% by weight, the temperature at the end of the dough must be 24 °C, leaving the dough to rest in a container for approximately 45 - 90 minutes or preferably 60 minutes, weighing in shapes to 100 - 500 grams or preferably 200 grams each, leaving to rest for 30 minutes, spreading into a mould and leaving to rise for 5 - 6 hours before baking in the oven at approximately 120 to 160 °C or preferably 145 °C for 10 - 30 minutes or preferably 14 minutes, cooking the bases to 75% partial doneness, breaking them down, bagging them, labelling them and placing them in a cooler.
